# EUROPÄISCHE PATENTSCHRIFT

(11) **EP 1 995 205 B1**
(45) Veröffentlichungstag und Bekanntmachung des Hinweises auf die Patenterteilung: **11.07.2012**
(21) Anmeldenummer: 07405144.2
(22) Anmeldetag: 21.05.2007
(51) Int. Cl.: B66D 3/20, H02K 17/30, H02K 11/00, H02P 1/44

(54) **Hubwerk mit einem einphasigen Elektromotor**
Hoisting gear with a single-phase electric motor
Dispositif de levage doté d'un moteur électrique monophasé

(43) Veröffentlichungstag der Anmeldung: 26.11.2008
(73) Patentinhaber: Müller Martini Holding AG, 6052 Hergiswil (CH)
(72) Erfinder: Muri, Ivan, 6247 Schötz (CH)

(56) Entgegenhaltungen:
- EP-A2- 0 575 045
- GB-A- 2 175 467
- US-A- 3 971 971
- US-A- 4 670 697
- US-A- 4 751 449

## Beschreibung

Die Erfindung betrifft ein Hubwerk mit einem einphasigen, aus Haupt- und Hilfswicklung bestehenden Elektromotor, einem mit der Hilfswicklung mittels Steuerung über einen Schalter zuschaltbar verbundenen Anlaufkondensator zur Simulation einer Phasenverschiebung in einer Startphase, wobei der Anlaufkondensator am Ende der Startphase durch den Schalter abgeschaltet wird.

Hubwerke mit einphasigen Elektromotoren sind seit langem bekannt. Sie werden beispielsweise in Werkstätten zum Umschlag von Waren mit vergleichsweise geringem Gewicht verwendet. Sie kommen vor allem dort zum Einsatz, wo nur Einphasennetze vorhanden sind und somit die an sich vorteilhafteren Hubwerke mit dreiphasigen Motoren, auch Einphasenhubwerk genannt, nicht verwendet werden können. Dies ist weiterhin in verschiedenen Ländern der Fall.

Gegenüber Hubwerken mit dreiphasigen Motoren besteht bei einfachen Hubwerken die Schwierigkeit, dass sie in der Regel einen Anlaufkondensator benötigen, der in der Startphase des Hubmotors eine Phasenverschiebung simuliert, die dem Motor ein erhöhtes Anlaufmoment zur Verfügung stellt. Ein Anfahren ist damit auch bei teilweise oder ganz angehobener Last möglich. Nach dem Anfahren muss dann jedoch der Anlaufkondensator mit einem geeigneten Schalter weggeschaltet werden, damit dieser nicht überladen wird und möglicherweise sogar explodiert.

Bei einem bekannten Einphasenhubwerk, wie z.B. bei der EP-A-0 575 045, ist der genannte Schalter zum Wegschalten des Anlaufkondensators als Fliehkraftschalter ausgebildet. Dieser ist auf eine Antriebsachse aufgebaut. Erreicht die Antriebsachse eine vorbestimmte Drehzahl, so schaltet der Fliehkraftschalter den Anlaufkondensator selbsttätig ab. Die Abschaltdrehzahl beträgt beispielsweise 2'500 Umdrehungen pro Minute. In der Praxis hat sich dieses Einphasenhubwerk an sich bewährt.

Aufgrund der grossen Ströme, die vom Fliehkraftschalter geschaltet werden müssen, ist die Lebensdauer des Fliehkraftschalters in einem solchen Einphasenhubwerk wesentlich kürzer als die Lebensdauer üblicher Einphasenhubwerke. Die Fliehkraftschalter müssen deshalb vergleichsweise häufig ausgewechselt werden. Beispielsweise können in einem Fliehkraftschalter die Kontakte verschweisst werden, und in der Folge kann der Anlaufkondensator überlastet und zerstört werden. Die defekten Bauteile müssen in diesem Fall vor dem weiteren Gebrauch ausgetauscht werden.

Bekannt ist auch die Verwendung von einstellbaren Zeitschaltrelais, welche in der Startphase nach einer bestimmten Zeitdauer von beispielsweise 0,5 Sekunden den Anlaufkondensator wegschalten. Solche Zeitrelais besitzen jedoch die gleichen Nachteile wie Fliehkraftschalter und müssen somit ebenfalls häufig ausgetauscht werden.

Der Erfindung liegt die Aufgabe zugrunde, ein Hubwerk mit einphasigem Motor der genannten Art zu schaffen, das die genannten Nachteile vermeidet. Das Hubwerk soll trotzdem kostengünstig herstellbar sein und eine hohe Funktionssicherheit aufweisen.

Die Aufgabe ist bei einem Hubwerk der genannten Art dadurch gelöst, dass der Schalter als Halbleiterrelais ausgebildet ist. Solche Relais werden auch als Solid State Relais (SSR) bezeichnet. Diese werden auch bei häufigem Schalten von hohen Strömen nicht beschädigt und sind damit auch bei einer Verwendung in einem Einphasenhubwerk über die übliche Lebensdauer solcher Einphasenhubwerke hinaus funktionstüchtig. Ein Auswechseln erübrigt sich damit. Solche Relais sind wesentlich kostengünstiger herstellbar als Fliehkraftschalter, so dass die Herstellungskosten von Einphasenhubwerken wesentlich gesenkt werden können.

Nach der Erfindung ist vorgesehen, dass das Halbleiterrelais den Anlaufkondensator nach dem Ablauf einer bestimmten Zeitdauer wegschaltet. Diese Zeitdauer beträgt beispielsweise etwa 0,5 Sekunden. Es ist hier aber auch eine andere kürzere bzw. längere Abschaltzeitdauer denkbar. Alternativ ist auch eine Ausführung möglich, bei welcher das Halbleiterrelais den Anlaufkondensator beim Erreichen einer bestimmten Drehzahl wegschaltet.

Nach einer Weiterbildung der Erfindung ist vorgesehen, dass das Halbleiterrelais mit einer Antriebswelle gekoppelt ist. Vorzugsweise ist hierbei auf der Antriebswelle ein Drehzahlnehmer angeordnet, der mit dem Halbleiterrelais verbunden ist. Der Drehzahlnehmer übermittelt der Steuerung bzw. dem Halbleiterrelais die Drehzahl der Antriebswelle, so dass die Steuerung nach Erreichen einer vorbestimmten Drehzahl automatisch den Anlaufkondensator wegschaltet.

Der Drehzahlnehmer ist vorzugsweise zwischen dem einphasigen Hubmotor und einem Getriebe angeordnet. Das Einphasenhubwerk gemäss der vorliegenden Anmeldung eignet sich insbesondere als Kettenhubwerk.

Weitere vorteilhafte Merkmale ergeben sich aus den abhängigen Patentansprüchen, der nachfolgenden Beschreibung sowie der Zeichnung.

Ausführungsbeispiele der Erfindung werden nachfolgend anhand der Zeichnung näher erläutert. Es zeigen:
- Fig. 1: schematisch die Anlaufsteuerung eines erfindungsgemässen Hubwerks mit einphasigem Elektromotor,
- Fig. 2: eine erfindungsgemässe Anlaufsteuerung gemäss einer Variante und
- Fig. 3: eine räumliche Ansicht eines erfindungsgemässen Einphasenhubwerks, wobei Gehäuse weggelassen und die Steuerung ausgebaut ist.

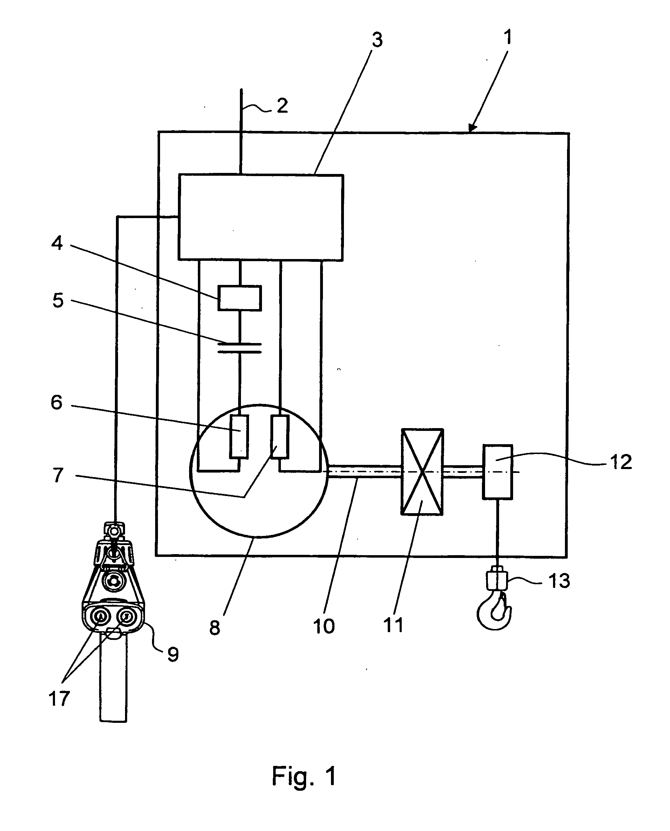

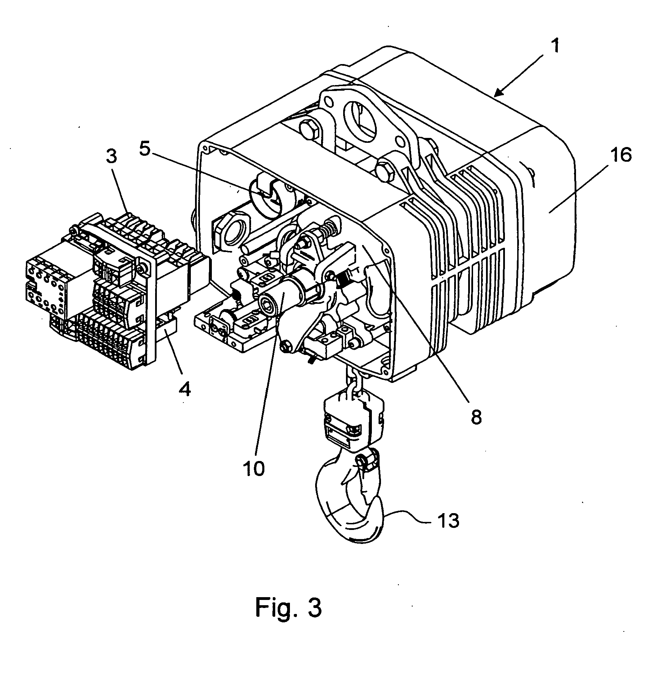

Das in den Figuren 1 und 3 gezeigte Einphasenhubwerk 1 besitzt ein Gehäuse 15, bei dem in Figur 3 die vordere Abdeckung aus zeichnerischen Gründen weggelassen ist. Im Gehäuse 15 ist ein Elektromotor 8 angeordnet, der ein einphasiger Hubmotor ist und der eine Antriebswelle 10 aufweist, die über ein Getriebe 11 einen Kettentrieb 12 antreibt. Mit dem Kettentrieb 12 kann ein Lasthaken 13 mit einer hier nicht gezeigten Last gesenkt und angehoben werden. Das Einphasenhubwerk 1 ist zur Stromversorgung in üblicher Weise an eine Netzleitung 2 angeschlossen.

Zur Steuerung des Elektromotors 8 ist im Gehäuse 15 zudem eine Steuerung 3 angeordnet, die gemäss Figur 1 mit einem Steuerschalter 9 verbunden ist. Solche Steuerschalter 9 sind an sich bekannt und ermöglichen eine Handsteuerung durch Betätigen von zwei oder mehr Tasten 17. Beim Betätigen der einen der Tasten 17 wird der Lasthaken 13 angehoben und im anderen Fall abgesenkt. Das genannte Getriebe 11 ist in einem Getriebekasten 16 untergebracht.

Der Elekromotor 8 ist über die in Figur 1 gezeigte Steuerung 3 gesteuert, die mit dem Steuerschalter 9 verbunden ist. Die Steuerung 3 bildet mit einem Halbleiterrelais 4, einem Anlaufkondensator 5 und einer Hilfswicklung 6 eine Anlaufsteuerung. Die Hilfswicklung 6 ist somit über den Anlaufkondensator 5 und das Halbleiterrelais 4 mit der Steuerung 3 verbunden. Der Anlaufkondensator 5 wird auch Startkondensator genannt und ist an sich bekannt. Beim Einschalten simuliert der Anlaufkondensator 5 eine Phasenverschiebung, die dem Elektromotor 8 ein erhöhtes Anlaufmoment zur Verfügung stellt. Dadurch ist es möglich, auch bei einer teilweise oder ganz angehobenen Last anzufahren. Nach einer vergleichsweise kurzen Zeitdauer von beispielsweise 0,5 Sekunden wird der Anlaufkondensator 5 vom Halbleiterrelais 4 abgeschaltet. Der Elektromotor 8 arbeitet nun nur noch über eine Hauptwicklung 7. Mit dem Abschalten des Anlaufkondensators 5 wird verhindert, dass der Anlaufkondensator 5 überladen wird. Das an sich bekannte Halbleiterrelais 4 besitzt keine beweglichen Teile und insbesondere auch keine Kontakte, die abschmelzen oder verschweissen könnten. Mit dem Halbleiterrelais 4 kann somit unter grossem Strom geschaltet werden, ohne dass ein Ausfall des Halbleiterrelais befürchtet werden müsste. Es kann somit erwartet werden, dass die Lebensdauer des Halbleiterrelais 4 höher als die Lebensdauer des Einphasenhubwerks 1 insgesamt. Das Halbleiterrelais 4 kann in an sich bekannter Weise mit Transistoren oder Thyristoren hergestellt werden.

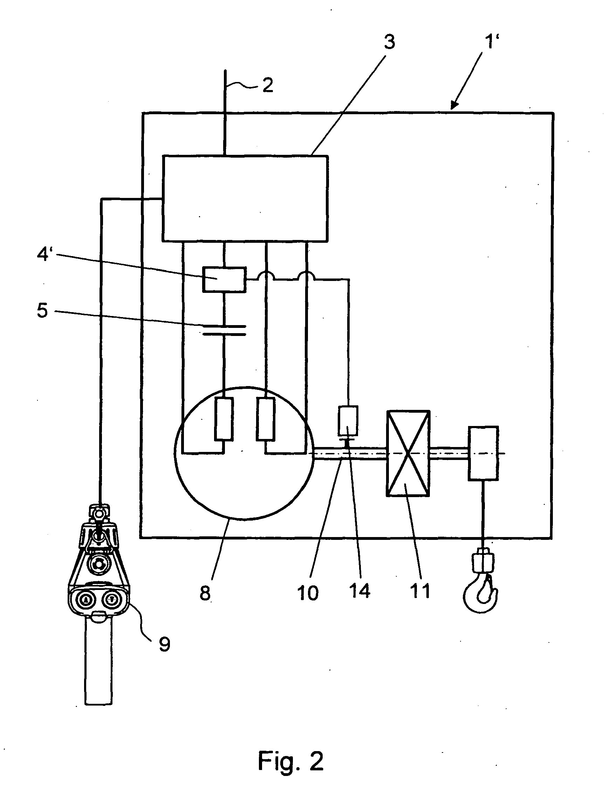

Die Figur 2 zeigt eine Variante eines erfindungsgemässen Einphasenhubwerks 1'. Dieses unterscheidet sich vom oben erwähnten Einphasenhubwerk 1 dadurch, dass ein Halbleiterrelais 4' vorgesehen ist, das mit einem drehenden Teil drehzahlgekoppelt ist. Hierzu ist das Halbleiterrelais 4' zur Signalübertragung mit einem Drehzahlnehmer 14 verbunden, der an der Antriebswelle 10 oder einem anderen geeigneten drehenden Teil angeordnet ist. Vorzugsweise ist der Drehzahlnehmer 14 zwischen dem Elektromotor (8) und dem Getriebe 11 angeordnet. Der Drehzahlnehmer 14 ermittelt die Drehzahl der Antriebswelle 10 und übermittelt diese dem Halbleiterrelais 4' bzw. der Steuerung 3. Ist eine vorbestimmte Drehzahl von beispielsweise 2'500 pro Minute erreicht, so schaltet das Halbleiterrelais 4' selbsttätig den Anlaufkondensator 5 weg. Eine Drehzahlkuppelung wird gegenüber einer zeitverzögerten Abschaltung bevorzugt, bedeutet jedoch durch den Einbau eines Drehzahlnehmers 14 einen höheren Aufwand. Der Drehzahlnehmer 14 kann üblich ausgebildet sein, beispielsweise kann er die Drehzahl mechanisch, elektrisch oder beispielsweise magnetisch oder auch optisch aufnehmen. Auch bei diesem Ausführungsbeispiel besteht der Vorteil, dass das Halbleiterrelais 4' ohne mechanisch bewegliche Teile schaltet und deshalb die Lebensdauer wesentlich höher ist als bei einem mechanischen Schalter, beispielsweise einem Fliehkraftschalter.

## Patentansprüche

1. Hubwerk, mit einem einphasigen, aus Haupt- (7) und Hilfswicklung (6) bestehenden Elektromotor (8), einem mit der Hilfswicklung (6) mittels Steuerung (3) über einen Schalter (4) zuschaltbar verbundenen Anlaufkondensator (5) zur Simulation einer Phasenverschiebung in einer Startphase, wobei der Anlaufkondensator (5) am Ende der Startphase durch den Schalter (4) abgeschaltet wird, **dadurch gekennzeichnet, dass** der Schalter (4) als Halbleiterrelais ausgebildet ist, und dass der Anlaufkondensator (5) durch das Halbleiterrelais (4) nach einer bestimmten Zeitdauer abschaltbar ist.

2. Hubwerk nach Anspruch 1, **dadurch gekennzeichnet, dass** die Zeitdauer mittels Steuerung (3) einstellbar ist.

3. Hubwerk nach Anspruch 1, **dadurch gekennzeichnet, dass** das Halbleiterrelais (4) den Anlaufkondensator (5) beim Erreichen einer bestimmten Drehzahl des Elektromotors (8) abschaltet.

4. Hubwerk nach Anspruch 3, **dadurch gekennzeichnet, dass** das Halbleiterrelais (4) mit einem an einer Antriebswelle (10) angeordneten Drehzahlnehmer (14) verbunden ist.

5. Hubwerk nach Anspruch 4, **dadurch gekennzeichnet, dass** der Drehzahlnehmer (14) zwischen dem einphasigen Elektromotor (8) und einem Getriebe (11) angeordnet ist.

## Claims

1. A hoisting gear, with a single-phase electric motor (8), consisting of main winding (7) and auxiliary winding (6), and with a starting capacitor (5) which is connected to the auxiliary winding (6) and can be switched on by means of a control unit (3) via a switch (4) for simulation of a phase shift in a starting phase, the starting capacitor (5) being switched off by the switch (4) at the end of the starting phase, **characterized in that** the switch (4) takes the form of a semiconductor relay, and **in that** the starting capacitor (5) can be switched off by the semiconductor relay (4) after a specific period of time.

2. A hoisting gear according to Claim 1, **characterized in that** the period of time can be set by means of the control unit (3).

3. A hoisting gear according to Claim 1, **characterized in that** the semiconductor relay (4) switches off the starting capacitor (5) when the electric motor (8) reaches a specific speed.

4. A hoisting gear according to Claim 3, **characterized in that** the semiconductor relay (4) is connected to a speed sensor (14) located on a drive shaft (10).

5. A hoisting gear according to Claim 4, **characterized in that** the speed sensor (14) is located between the single-phase electric motor (8) and a gear unit (11).

## Revendications

1. Dispositif de levage, avec un moteur électrique (8) monophasé, constitué d'un bobinage principal (7) et d'un bobinage auxiliaire (6), et avec un condensateur de démarrage (5), relié au bobinage auxiliaire (6) en pouvant être activé par une unité de commande (3) au moyen d'un commutateur (4) et destiné à simuler un déphasage pendant une phase de démarrage, sachant que le condensateur de démarrage (5) est désactivé par le commutateur (4) à la fin de la phase de démarrage,
**caractérisé en ce que** le commutateur (4) est réalisé sous forme de relais semi-conducteur, et **en ce que** le condensateur de démarrage (5) peut être désactivé par le relais semi-conducteur (4) au bout d'une durée déterminée.

2. Dispositif de levage selon la revendication 1, **caractérisé en ce que** la durée est réglable au moyen de l'unité de commande (3).

3. Dispositif de levage selon la revendication 1, **caractérisé en ce que** le relais semi-conducteur (4) désactivé le condensateur de démarrage (5) à l'atteinte d'une vitesse de rotation donnée du moteur électrique (8).

4. Dispositif de levage selon la revendication 3, **caractérisé en ce que** le relais semi-conducteur (4) est relié à un capteur de vitesse de rotation (14) disposé sur un arbre d'entraînement (10).

5. Dispositif de levage selon la revendication 4, **caractérisé en ce que** le capteur de vitesse de rotation (14) est disposé entre le moteur électrique monophasé (8) et un mécanisme de transmission (11).
